# EUROPEAN PATENT SPECIFICATION

(11) **EP 3 680 422 B1**
(45) Date of publication and mention of the grant of the patent: **07.12.2022**
(21) Application number: 19020728.2
(22) Date of filing: 30.12.2019
(51) Int. Cl.: E04G 11/22, E04G 17/06, E04G 21/04, B28B 23/00, H02G 3/00, E04B 1/16, E04B 1/35, B28B 1/00, B33Y 30/00, B33Y 40/00, B33Y 80/00, E04B 2/86, B33Y 10/00

(54) **CO-ROBOT POURING WALLS INTO A PLACE**
CO-ROBOTER ZUM GIESSEN VON WÄNDEN AN EINER STELLE
CO-ROBOT COULANT DES MURS DANS UN LIEU

(43) Date of publication of application: 15.07.2020
(73) Proprietor: Naydenov, Nikolay Lyubomirov, 1000 Sofia (BG)
(72) Inventor: Naydenov, Nikolay Lyubomirov, 1000 Sofia (BG)

(56) References cited:
- WO-A1-2017/185146
- WO-A1-2018/112561

## Description

### FIELD OF THE INVENTION

The present invention relates to the field of construction. Co-robot together with several workers builds walls through a controlled pouring layer-by-layer of cement mortar with foam into a lifting formwork. Recycled material from demolished buildings and aggregates from soil can be added. In the finished wall are pre-embedded all the Mechanical, Electrical, Plumbing installations, frames for doors and windows, as well as the thermal insulation of the external walls.

### BACKGROUND OF THE INVENTION

More than 100 years ago Thomas Edison began to develop concrete walls poured into a mounted onsite formwork. A major disadvantage of wall outflowing on site is the high cost of formwork and the many manual works for building and dismantling the shuttering. There are also new developments for cast in place walls with a galvanized metal structure filled with concrete from a robot. But this method is expensive and ineffective and has not been applied. / Lit. 1 /.

More than 40 years of so-called three-dimensional building printers have been known to have been laid by successive layers of cement mortar. According to world-class construction specialists, the thin-layer cement mortar has no strength to allow the building to withstand earthquake or wind. Layers on top of each other often lose resistance and have a local slip. The material is heavy and with poor thermal insulation. The maximum particle size is in the range of 2 mm to 3 mm, which limits the use of recycled materials from demolished buildings.

A "Method for the rapid construction of energy-efficient buildings " /Lit. 2/ is known, according to which walls can be printed and formwork can be added to the horizontal frame for smoothing the wall. Also known as a "Method and device for producing hydraulically bound building materials" / Lit. 3/, according to which the mixer is placed on the horizontal frame by the method / Lit. 2/ and can fill the wall upwards but must rise above it. The disadvantage of the methods is that they can not be applied when the load-bearing structure of the ceiling of the room is already built. This hinders the upper end of the wall from being filled and it may lose its resistance. The disadvantage is also the need for a higher viscosity of the material, which prevents the installation of MEP installations, as well as the use of recycled material from destroyed buildings and soil aggregates.

The MEP installations may pre-installed when pouring concrete into a formwork. But for the time being three-dimensional printing of buildings, does not have any technology that allows MEP installations to be pre-installed.

### SUMMARY OF THE INVENTION

The object of the present invention is to create a co-robot which quickly and cheaply builds walls with weight, strength and thermal insulation in accordance with the International Residential Code (IRC) and the international building code (IBC). Also, do not change the design and legalization of buildings. Recycled material from demolished buildings and soil aggregates must be able to be added and be embedded the MEP installations and heat insulation are built.

The object of the invention is solved by a co-robot apparatus according to claim 1 that combines creep formwork and 3D printing of buildings. From into creep formwork and the horizontally moving trolley with nozzle is pouring a low-viscosity layer with early bonding. For the building to have the necessary strength, the walls are built after the construction of the building structure. This does not change the design and legalization of the building. A suitable material is a foamed cement mortar with fast bonding and low viscosity because it has the necessary strength and thermal insulation properties. Can also into walls installing MEP installations, recycled material from demolished buildings and soil aggregates.

The movement is carried out by a manipulator, which is built to the following scheme. The nozzle that pours the material(s) moves horizontally along the frame that moves vertically from the other two frames. A scheme is similar to most 3D printers but is closest to the application (2) because the manipulator is perpendicular to the floor. In order to work inside the built structure of the building, the manipulator has a new design. The horizontal frame is replaced by a frame-formwork. The internal formwork has supporting structure is also a rail track for a vertically mounted trolley with the nozzle(s). In order to be a two-sided formwork, the outer formwork has been installed to the inner frame-formwork and not has supporting structure. The outer formwork is taller than the internal formwork is with the size of the pouring nozzle so only it reaches in the ceiling. The outer formwork is joined to the inner formwork by quick links with new holders, which are constructed by two vertical columns joined together in the middle with a beam. Upper and lower spaces are formed in which are mounted MEP installations on the floor and under the ceiling When pouring finished, special new quick couplings automatically unclip the holder from the inner formwork carrier and the shuttering frame is automatically lowered to the floor to allow the nozzle with pipe/s to be carried by workers to the new extrusion site. The outer formwork remains above and later workers it dismantled. The new holder remains embedded in the wall. The horizontal structure is mounted on two new vertical lifting devices. Which consist off a vertical lifting structure which is connected to a lower and upper support stand by vertical hinges. A worker places the vertical lifting device at the exact location and straightens it. An electronic inclinometer on a special screen shows the vertical deviation. The worker tilts the lifting structure in this direction and, when it is vertically, the structure is automatically raised to locking towards the ceiling and the floor, giving a signal to the computer controlling the operations. During the work of an incidental violation of the vertical, a braking signal is automatically given.

Cement mortar with foam, with early bonding and with low viscosity, is poured from a nozzle into the formwork. Recycled material from destroyed buildings and/or soil aggregates is poured from the second nozzle and pipeline and embedded in the wall together with the foamed cement mortar. The vertical movement of the horizontal frame-formwork is coordinated with the time of initial strength of the cement mortar with foam or its mixture with inert fillers. The layer of material under the lifting formwork is of sufficient strength and to be able to withstand the weight of the material above it.

At the top on the vertical trolley has a funnel-shaped nozzle with flats both sides to prevent material leakage and to smooth the wall. There are two movable nozzle pipes. The first pipe feeds the cement mortar with foam and the second pipe, that may be missing, to pour the inert fillers. The two pipes are rotated simultaneously in a horizontal and vertical direction to follow the direction of the trolley and its height from the floor, in order to move the nozzle is used a spatial kinematic pair. The horizontal hinge is attached to the trolley, at the front of it has placed a vertical stand that has a vertical hinge hooking the pipes in the middle of them.

Continuous printing is supported as follows. Raw materials from silos, big bags and sacks or barrels by metering systems are supplied by auger, pneumatic transport or in the new closed-type mixer produces a continuous cement-based foam solution with a start time of the cement joint of 3 to 5 minutes. When the wall pouring is completed or in an accident, the computer is given a braking signal. First, known chemical additives are added to extend the start time of the cement joint. Once computer after it calculating the time for which the pipe with slow binding material will be filled stops the dry cement into the mixer. For a short time is fed only water to clean the mixer and the whole process is stopped. When work for the day is over to clean the pipe is supplied only foam.

The second task of the co-robot invention to embed in the pre-installed MEP installations is solved with new special stands on which MEP installations are installed. This allows installed MEP installations not to interfere with the lifting formwork. The MEP installations are pre-fabricated or on site and mounted on new stands. The stand is a vertical bar with a horizontal plate which is mounted on a finished floor or under a finished ceiling. The stands are short for installation of a plumbing installation above the floor or electrical installation under the ceiling and long of the installations outputs of the installations in the middle of the wall. The stands for MEP installations are installed in the empty space where the wall will be poured. For a quick and accurate of localization coordinates of the installations specified by the installer's digital drawings, may use a Total Station "TS" with a laser or Robots Total Station "RTS".

Another object of the invention is to be able to pre-assemble thermal insulation of the outer walls. The task is solved as a wall of foamed polystyrene blocks, which are glued together with mounting foams, and a long distance installation for MEP installations, between which a horizontal band is placed above the floor and under the ceiling. For the internal formwork is the frame-formwork and for an outer shuttering the wall of polystyrene blocks is used. For better adhesion, insulating dowels are preloaded in the thermal insulation. Pouring of the cement mortar with foam. A horizontal band over the floor assumes the initial hydraulic pressure of the cast material and prevents allow the wall from thermal insulation blocks to be move. With the slow climbing of the formwork, the poured material adheres to the insulation and its early strength prevents large hydraulic pressure that would destroy the wall of thermal insulation.

### EXAMPLES FOR IMPLEMENTATION OF THE INVENTION

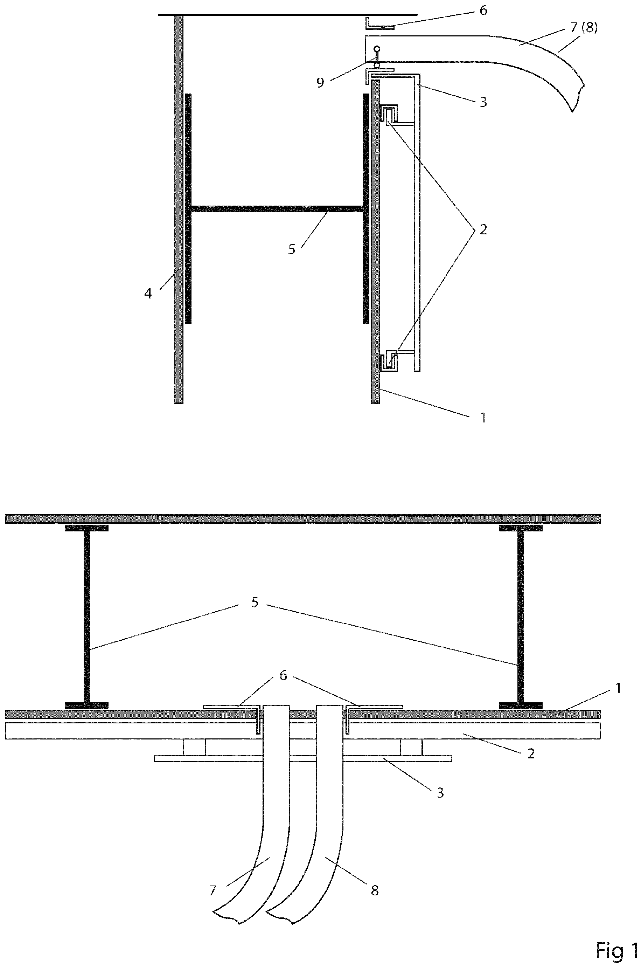

Fig. 1 Shows a horizontal and vertical section for the execution of the shuttering frame
   On the inner formwork (1) there is placed the supporting structure (2), which is also a rial track of the vertical carriage (3), the outer formwork (4) is mounted with a holder (5) to the inner formwork (1). On the vertical trolley (3) there is fixed a funnel (6), where the pipe supplying the cement mortar solution (7) and the tube feeding the inertial fillers (8) are discharged, the tubes rotate simultaneously in a horizontal and vertical direction to follow the direction of moving the carriage (3) and changing its height from the floor, from a spatial kinematic pair (9). The outer shuttering (4) is taller than the internal shuttering (1) to avoid overflowing the pouring material and slightly lower than the funnel (6) because when the ceiling is reached, the outer shuttering rests in the ceiling and above the inner formwork the ceiling. The carriage (3) moves with the funnel. On both sides of the funnel (6), there are flat planes (10) which form the upper end of the wall.

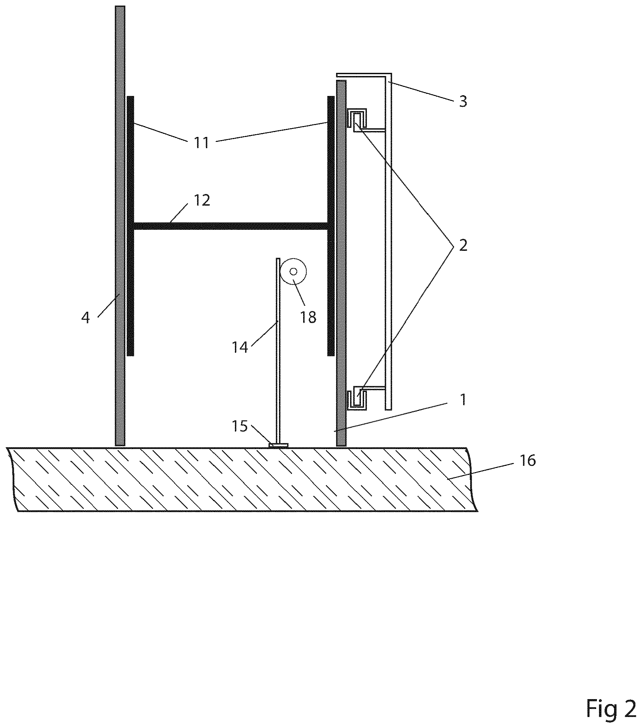

Fig. 2 Shows an example of mounting of MEP installations over the floor
   The installations (13) consists of a vertical stand (14) and a horizontal plate (15) which is mounted to the finished floor (16). The stands are short for installation plumbing (18) over the floor (16) and long stands (19) to mount outlets to the installations in the middle of the wall.

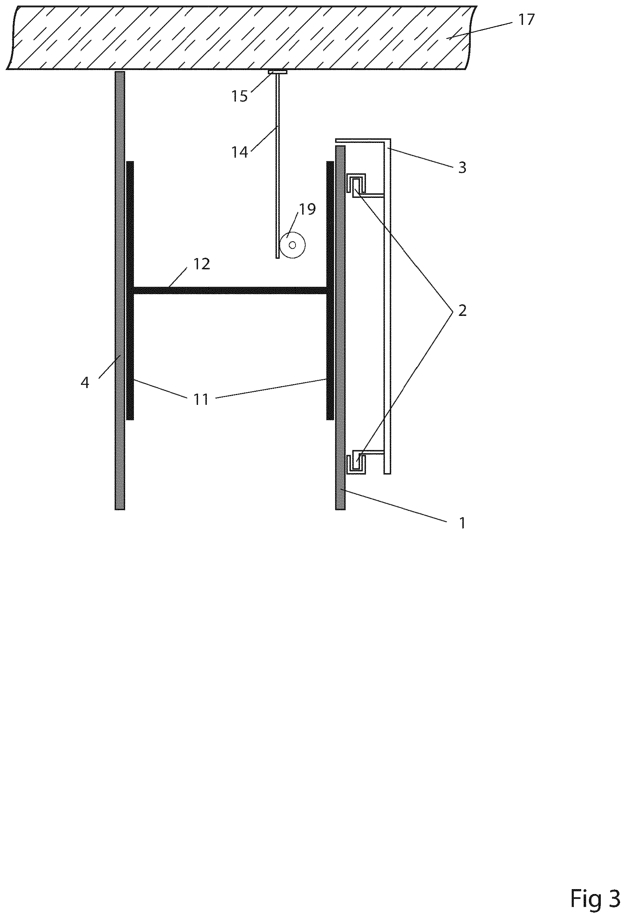

In Fig. 3 Shows an example of mounting of MEP installations under the ceiling
   The MEP stack (13) consists of a vertical strip (14) and the horizontal plate (15) which is mounted to the finished ceiling (17). The short stands are for an electrical installation (19) under the ceiling (17) and long stands (20) to mount outlets of the installations in the middle of the wall.

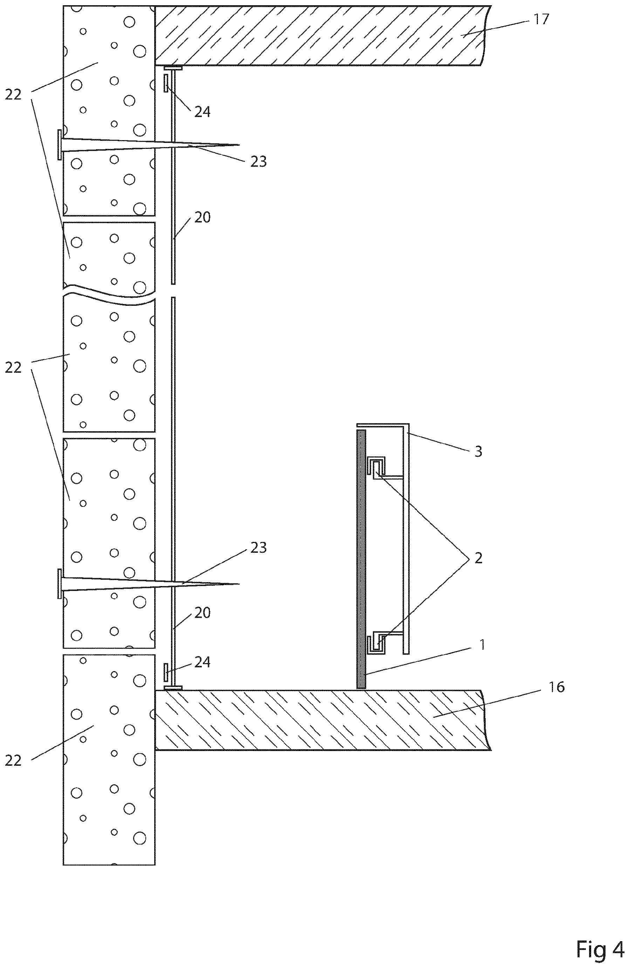

Fig. 4 An example of thermal insulation installation
   A thermo-insulating wall (21) from foamed polystyrene blocks (22), with pre-loaded dowels (23), with mounting foam, are glued to each other and to long stands (20) and a horizontal band (24). The shuttering frame has only internal formwork (1), and for the outer shuttering the pre-assembled thermal insulation wall (21) is used.

### LITERATURE

1. Walls for Robotic Fabrication in Concrete. Pegna (1997)
2. WO2017185146 "Method for the rapid construction of energy-efficient buildings "
3. WO2018112561 "Method and device for producing hydraulically bound building materials"

### DESCRIPTION OF THE POSITIONS

- Position 1.: Internal formwork
- Position 2.: Strengthening the internal formwork
- Position 3.: Vertical trolley
- Position 4.: External formwork
- Position 5.: Holder for the formworks
- Position 6.: Funnel
- Position 7.: Tube supplying cement-foam solution
- Position 8.: The tube delivering the inert fillers
- Position 9.: Spatial kinematic pair
- Position 10.: Flat plates to the Funnel
- Position 11.: Vertical column of the holder for the formworks
- Position 12.: The horizontal beam of the holder for the formworks
- Position 13.: MEP installations
- Position 14.: Vertical stand for MEP Installations
- Position 15.: Horizontal plate mounting plate for MEP installations
- Position 16.: Finished floor
- Position 17.: Ready ceiling
- Position 18.: Plumbing installation
- Position 19.: Electrical installation
- Position 20.: Long stand for installation of MEP installations
- Position 21.: Thermal insulation wall
- Position 22.: Blocks of polystyrene foam
- Position 23.: Dowels for thermal insulation
- Position 24.: Horizontal Band

## Claims

1. A Co-robot apparatus
for building walls after a building structure is constructed by controlling pouring of a low-viscosity solution and an early bonding into a creep formwork, the co-robot comprises a manipulator, a vertically mounted trolley (3) with a nozzle or nozzles, the creep formwork in form of a horizontal frame (2) and two vertical constructions, the manipulator being adapted to perform the pouring in which a horizontal movement is carried out by the vertically mounted trolley with the nozzle or the nozzles, the vertically mounted trolley (3) being adapted to move horizontally along the horizontal frame, the horizontal frame being adapted to vertically move from the two vertical constructions,
**characterized in that** the horizontal frame is a framed formwork consisting of an internal formwork (1) with a supporting structure which is a rail track on which the vertical trolley (3) is mounted and an outer formwork (4) attached to the internal formwork (1).

2. The co-robot according to claim 1, whereby the internal formwork is supported by a metal construction of rails, and the outer formwork (4) is not fortified, the internal and outer formwork being joined by quick links with a holder (12), which comprises two vertical columns (11) joined together in the middle with a horizontal beam (12) to form upper and lower spaces between the internal and outer formwork to avoid interfering of pre-installed mechanical, electrical and plumbing (MEP) (13) installations over a floor (16) and below a ceiling (17) installation of the building structure.

3. The co-robot according to claim 2, whereby upon completion of the pouring of the wall, the quick links on sides of the frame-formwork (2) are adapted to automatically unwound from the holder and the creep formwork (1) is adapted to descend downward, the outer formwork (4) is adapted to remain in place and is manually removable, and the holder is adapted to remain embedded in the wall.

4. The co-robot according to claims 1-3, whereby at the top of the vertical trolley is the nozzle with a funnel shape (6) for pipes of the co-robot adapted to supply the cement mortar and inert fillers, the nozzle with the pipes are rotatable simultaneously in a horizontal and vertical direction to follow a direction of the trolley (3) and its height from the floor (16), whereby the co-robot comprises a spatial kinematic pair adapted to move the nozzle, whereby a horizontal hinge is attached to the trolley, at the front of the horizontal hinge is placed a vertical stand that has a vertical hinge hooking the pipes (7) in the middle of them.

5. The co-robot according to claims 1-4, whereby the creep formwork is mounted on special lifting devices composed of a vertical lifting structure which is connected to a lower and upper support stand by vertical hinges whereby the lifting device is adapted to be placed by a worker at its exact location and to be put up, an electronic Inclinometer of the lifting device is adapted to show on a special screen the deviation from the vertical, the lifting structure is adapted to be tilt by the worker in this direction and, when it is vertical, the structure is automatically raisable to lock towards a ceiling and a floor of the building structure, and a signal is sendable from the lifting device to a control computer of the co-robot for the readiness of the vertical lifting structure; whereby the lifting device is adapted, during operation with an incidental violation of the vertical height, to automatically give an automatic stop signal.

6. The co-robot according to claim 5, whereby the co-robot comprises a closed-type mixer adapted to produce a continuous cement-based foam solution, and adapted to, at the end of the wall pouring or when an accident occurs, to send a signal to the computer to stop feeding the cement mortar with foam and clean the mixer whereby known chemical additives can first be changed in order to extend the start time of the cement bonding, and the computer is adapted, after calculating the time for which the pipe with slow binding material will be filled, to stop the dry cement in to the mixer, to feed for a short time only water to clean the mixer and to stop the whole process; whereby when work for the day is over only foam can be supplied to clean the pipe (7).

7. The co-robot according to claim 6, comprising stands, short stands and long stands and pre-fabricated or made on the site MEP (13) installations adapted to be mounted via said stands (14), that are made from a vertical bar at one end with a horizontal plate (15) which is mountable to the floor (16) or to the ceiling (17), whereby the short stands are adapted for the installation of a plumbing installation (18) over the floor (16) and for electrical installation (19) under the ceiling (17) and the long stands (14) are adapted to mount installations output (18) in the middle of the walls, by not hindering the vertical movement of the frame-formwork whereby when mounted, the horizontal installation is located in a horizontal space at a lower or upper edge of the creep formwork (2), and the long posts are mountable on the side of the formwork holder (12).

8. The co-robot according to claim 7, comprising in the case of thermal insulation (21) for the outer formwork (4) from which a wall of foam-bonded foamed polystyrene blocks (22) with built-in dowels (23) can be built, and for the internal formwork (4) it is the frame-formwork (2), for taking the initial hydraulic pressure of cast material when cast and the non-displacement of the wall from the thermal insulating blocks when built whereby at the inner end of the wall of the polystyrene blocks, when built, in length of the wall the long stands (20) for MEP installations are mountable and a horizontal band (24) is placable over the floor (16) and under the ceiling (17), all are adapted to be glued to the insulation with mounting foam; whereby the creep formwork (2) is adapted to climb slowly, whereby the poured material can adhere to the insulation and its early strength would not allow a large hydraulic pressure that would destroy the layer of thermal insulation.

## Patentansprüche

1. Ein Co Roboter Apparatus
zum Bauen von Wänden, nachdem eine Gebäudestruktur errichtet wurde, durch Kontrollieren des Gießens von einer niedrigviskosen Lösung und einem frühen Einbinden in eine Kriechschalung umfasst der Co-Roboter beinhaltet ein Manipulator, ein vertikal montierter Wagen (3) mit einer Düse oder Düsen, die Kriechschalung in Form einer horizontaler Rahmen (2) und zwei vertikale Konstruktionen, wobei der Manipulator angepasst ist, um das auszuführen Gießen, bei dem eine horizontale Bewegung durch den vertikal montierten Laufwagen mit dem ausgeführt wird Düse oder den Düsen, wobei der vertikal angebrachte Laufwagen (3) angepasst ist, um sich horizontal entlang der zu bewegen horizontaler Rahmen, wobei der horizontale Rahmen angepasst ist, um sich vertikal von den beiden Vertikalen zu bewegen Konstruktionen,
**dadurch gekennzeichnet, dass** der horizontale Rahmen eine Rahmenschalung ist, die aus einem inneren besteht Schalung (1) mit einer Tragkonstruktion, die eine Schienenbahn ist, auf der sich die vertikale Laufkatze (3) befindet montiert und eine Außenschalung (4) an der Innenschalung (1) befestigt.

2. Co-Roboter nach Anspruch 1, **dadurch gekennzeichnet, dass** die Innenschalung durch getragen wird eine Metallkonstruktion aus Schienen und die äußere Schalung (4) ist nicht befestigt, die innere Außenschalung durch Schnellverbindungen mit einem Halter (12), der aus zwei vertikalen Säulen besteht, verbunden ist (11), die in der Mitte mit einem horizontalen Balken (12) verbunden sind, um obere und untere Räume zu bilden zwischen Innen- und Außenschalung h, Elektrisch und Sanitär (AES) (13) Installationen über einem Boden (16) und unter einer Decke (17) Installation an der Gebäudestruktur.

3. Co-Roboter nach Anspruch 2, **dadurch gekennzeichnet, dass** nach Beendigung des Gießens der Wand die schnell Verbindungsglieder an den Seiten der Rahmenschalung (2) so angepasst sind, dass sie automatisch von der Halterung abgewickelt warden und die Kriechschalung (1) angepasst ist, um nach unten abgesenkt zu werden, die äußere Schalung (4) angepasst ist an Ort und Stelle bleiben und manuell entfernbar sind, und der Halter angepasst ist, um darin eingebettet zu bleiben Mauer.

4. Co-Roboter nach den Ansprüchen 1-3, **dadurch gekennzeichnet, dass** sich an der Spitze des vertikalen Wagens die Düse mit a befindet Trichterform (6) für Rohre des Co-Roboters angepasst, um den Zementmörtel und inerte Füllstoffe zuzuführen, die Düse mit den Rohren sind gleichzeitig in horizontaler und vertikaler Richtung drehbar, um a zu folgen Richtung des Transportwagens (3) und seine Höhe vom Boden (16), wodurch der Co-Roboter einen Raum umfasst kinematisches Paar angepasst, um die Düse zu bewegen, wobei ein horizontales Scharnier an dem Laufwagen befestigt ist, an An der Vorderseite des horizontalen Scharniers befindet sich ein vertikaler Ständer, der ein vertikales Scharnier zum Einhaken der Rohre hat (7) in der Mitte von ihnen.

5. Co-Roboter nach den Ansprüchen 1-4, **dadurch gekennzeichnet, dass** die Kriechschalung auf speziellen Hubwerken montiert ist Vorrichtungen, die aus einer vertikalen Hebestruktur bestehen, die mit einer unteren und einer oberen Stütze verbunden ist stehen durch vertikale Scharniere, wodurch die Hebevorrichtung so angepasst ist, dass sie von einem Arbeiter genau platziert werden kann Standort und aufgestellt werden, ein elektronischer Neigungsmesser der Hebevorrichtung angepasst ist, um auf einem anzuzeigen Spezialsieb die Abweichung von der Senkrechten, die Hubkonstruktion wird durch den Werker geneigt in dieser Richtung, und wenn sie vertikal ist, ist die Struktur automatisch anhebbar, um in Richtung a zu arretieren Decke und einem Boden der Gebäudestruktur, und ein Signal ist von der Hebevorrichtung zu senden an Steuerrechner des Co-Roboters für die Bereitschaft der vertikalen Hubkonstruktion; wodurch das Heben Das Gerät passt sich während des Betriebs bei zufälliger Verletzung der vertikalen Höhe automatisch an ein automatisches Stoppsignal geben.

6. Co-Roboter nach Anspruch 5, **dadurch gekennzeichnet, dass** der Co-Roboter einen daran angepassten Mischer vom geschlossenen Typ umfasst eine kontinuierliche zementbasierte Schaumlösung herzustellen, und angepasst, am Ende der Wand zu gießen oder B. bei einem Unfall, ein Signal an den Computer zu senden, damit der Zementmörtel nicht mehr zugeführt wird Mischer aufschäumen und reinigen, wobei bekannte chemische Zusätze zur Verlängerung zunächst gewechselt werden können die Startzeit der Zementbindung, und der Computer wird angepasst, nachdem die Zeit für berechnet wurde dem das Rohr mit langsam bindendem Material gefüllt wird, um den trockenen Zement in den Mischer zu stoppen kurzzeitig nur Wasser zuführen, um den Mischer zu reinigen und den gesamten Prozess zu stoppen; wobei wann Die Arbeit für den Tag ist beendet, es kann nur noch Schaum zugeführt werden, um das Rohr (7) zu reinigen.

7. Co-Roboter nach Anspruch 6, umfassend Ständer, kurze Ständer und lange Ständer und Vor-vor Ort hergestellte oder hergestellte AES - (13) Installationen, die geeignet sind, über die Ständer (14) montiert zu werden, d.h bestehen aus einer vertikalen Stange an einem Ende mit einer horizontalen Platte (15), die am Boden montierbar ist (16) oder an der Decke (17), wobei die kurzen Ständer für die Installation einer Sanitärinstallation geeignet sind Installation (18) über dem Fußboden (16) und für die Elektroinstallation (19) unter der Decke (17) und die lange Ständer (14) sind dazu geeignet, Ausgangsinstallationen (18) in der Mitte der Wände zu montieren, indem sie nicht Behinderung der vertikalen Bewegung der Rahmenschalung, **dadurch gekennzeichnet, dass** im montierten Zustand die horizontale die Installation befindet sich in einem horizontalen Raum an einer Unter- oder Oberkante der Kriechschalung (2), und die langen Pfosten sind seitlich am Schalungshalter (12) montierbar.

8. Co-Roboter nach Anspruch 7, umfassend im Falle einer thermischen Isolierung (21) für das Äußere Schalung (4), aus der eine Wand aus schaumgebundenen Styroporblöcken (22) mit eingebauten Dübeln besteht (23) gebaut werden kann, und für die Innenschalung (4) ist es die Rahmenschalung (2), für die die Initialen genommen werden hydraulischer Druck des Gussmaterials beim Guss und die Nichtverschiebung der Wand aus der Thermik Isolierblöcke, wenn gebaut, wobei am inneren Ende der Wand der Styroporblöcke, wenn eingebaut, in Länge der Wand sind die langen Standfüße (20) für AES-Installationen montierbar und waagerecht Band (24) über dem Boden (16) und unter der Decke (17) plazierbar ist, alle zum Ankleben geeignet sind Isolierung mit Montageschaum; **dadurch gekennzeichnet, dass** die Kriechschalung (2) langsam kletternd ausgebildet ist, wobei das eingegossene Material kann an der Dämmung haften und seine Frühfestigkeit würde keine große zulassen hydraulischer Druck, der die Wärmedämmschicht zerstören würde.

## Revendications

1. Un appareil co-robot
pour la construction de murs après la construction d'une structure de bâtiment en contrôlant le coulage d'un solution peu visqueuse et un force de liaison précoce un coffrage fluant, le co-robot comprend un manipulateur, un chariot monté verticalement (3) avec une buse ou des buses, le coffrage fluant se présentant sous la forme d'un cadre horizontal (2) et deux constructions verticales, le manipulateur étant adapté pour effectuer le versage dans lequel un mouvement horizontal est effectué par le chariot monté verticalement avec le buse ou les buses, le chariot monté verticalement (3) étant adapté pour se déplacer horizontalement le long de la cadre horizontal, le cadre horizontal étant adapté pour se déplacer verticalement à partir des deux verticaux constructions, **caractérisé en ce que** le cadre horizontal est un coffrage à ossature constitué d'un coffrage (1) avec une structure de support qui est une voie ferrée sur laquelle le chariot vertical (3) est monté et un coffrage extérieur (4) fixé au coffrage intérieur (1).

2. Co-robot selon la revendication 1, **caractérisé en ce que** le coffrage intérieur est supporté par une construction métallique de rails et le coffrage extérieur n'est pas armé (4) n'est pas fortifié, l'intérieur et coffrage extérieur relié par des maillons rapides à un support (12), qui comprend deux colonnes verticales (11) réunis au milieu avec une poutre horizontale (12) pour former des espaces supérieur et inférieur entre le coffrage intérieur et extérieur pour éviter l'interférence des éléments mécaniques, électriques préinstallés et de plomberie (MEP) (13) installations au-dessus d'un plancher (16) et sous un plafond (17) du Structure de bâtiment.

3. Co-robot selon la revendication 2, **caractérisé en ce que** à l'issue du coulage de la paroi, le rapide des liens sur les côtés du cadre-coffrage (2) sont adaptés pour se dérouler automatiquement du support et le coffrage fluant (1) est adapté pour descendre vers le bas, le coffrage extérieur (4) est adapté pour restent en place et sont amovibles manuellement, et le support est adapté pour rester encastré dans le mur.

4. Le co-robot selon les revendications 1 à 3, **caractérisé en ce que** au sommet du chariot vertical se trouve la buse avec un en forme d'entonnoir (6) des canalisations du co-robot adaptées à l'alimentation en mortier de ciment et en charges inertes, le la buse avec les tuyaux peuvent tourner simultanément dans une direction horizontale et verticale pour suivre un direction du chariot (3) et sa hauteur par rapport au sol (16), le co-robot comprenant un espace paire cinématique adaptée pour déplacer la buse, une charnière horizontale étant fixée au chariot, à l'avant de la charnière horizontale est placé un support vertical qui a une charnière verticale accrochant les tuyaux (7) au milieu d'eux.

5. Co-robot selon les revendications 1 à 4, **caractérisé en ce que** le coffrage fluant est monté sur des dispositifs de levage spéciaux composés d'une structure de levage verticale qui est reliée à un support inférieur et supérieur stand par des charnières verticales grâce auxquelles le dispositif de levage est adapté pour être placé par un travailleur à sa position exacte emplacement et à mettre en place, un inclinomètre électronique de l'appareil de levage est adapté pour montrer sur un écran spécial l'écart par rapport à la verticale, la structure de levage est adaptée pour être basculée par le travailleur dans cette direction et, lorsqu'elle est verticale, la structure est automatiquement relevable pour se errouiller vers un plafond et un plancher de la structure du bâtiment, et un signal peut être envoyé du dispositif de levage à un ordinateur de contrôle du co-robot pour la préparation de la structure de levage vertical ; par lequel le levage dispositif est adapté, lors d'un fonctionnement avec une violation accidentelle de la hauteur verticale, à automatiquement donner un signal d'arrêt automatique.

6. Co-robot selon la revendication 5, caractérisé en ce quel le co-robot comprend un mélangeur de type ermé adapté pour produire une solution continue de mousse à base de ciment, et adaptée pour, en bout de mur couler ou lorsqu'un accident se produit, envoyer un signal à l'ordinateur pour arrêter d'alimenter le mortier de ciment avec mousser et nettoyer le mélangeur, les additifs chimiques connus pouvant d'abord être modifiés afin d'étendre l'heure de début du collage du ciment, et l'ordinateur est adapté, après avoir calculé le temps pour lequel le tuyau avec le liant lent sera rempli, pour arrêter le ciment sec dans le mélangeur, pour alimenter pendant une courte période uniquement de l'eau pour nettoyer le mélangeur et arrêter l'ensemble du processus ; par lequel quand le travail de la journée est terminé, seule de la mousse peut être fournie pour nettoyer le tuyau (7).

7. Co-robot selon la revendication 6, comprenant des stands, des stands courtes et des stands longues et es installations MEP (13) préfabriquées ou réalisées sur site adaptées à être montées via lesdites stands(14), que sont constitués d'une barre verticale à une extrémité avec une plaque horizontale (15) qui peut être montée sur le sol (16) ou au plafond (17), les supports courts étant adaptés à l'installation d'une plomberie installation (18) au-dessus du sol (16) et pour l'installation électrique (19) sous le plafond (17) et le de longs stands (14) sont adaptés pour monter des installations de sortie (18) au milieu des murs, en ne entraver le mouvement vertical de l'ossature-coffrage **caractérisé en ce que** de sorte qu'une fois monté, l'horizontale l'installation est située dans un espace horizontal au niveau d'un bord inférieur ou supérieur du coffrage fluant (2), et les poteaux longs peuvent être montés sur le côté du support de coffrage (12).

8. Co-robot selon la revendication 7, comprenant dans le cas d'une isolation thermique (21) pour l'extérieur coffrage (4) à partir duquel un mur de blocs de mousse de polystyrène expansé (22) avec goujons intégrés (23) peut être construit, et pour le coffrage intérieur (4) c'est le coffrage-cadre (2), pour prendre le premier pression hydraulique du matériau coulé lors de la coulée et le non-déplacement de la paroi par rapport à la blocs isolants lorsqu'ils sont construits, à l'extrémité intérieure de la paroi des blocs de polystyrène, lorsque construit, dans la longueur du mur, les longs supports (20) pour les installations MEP sont montable et un horizontal la bande (24) peut être placée au-dessus du plancher (16) et sous le plafond (17), tous sont adaptés pour être collés au isolation avec mousse de montage; **caractérisé en ce que** dans lequel le coffrage fluant (2) est adapté pour monter lentement, dans lequel le matériau coulé peut adhérer à l'isolant et sa résistance initiale ne permettrait pas une grande pression hydraulique qui détruirait la couche d'isolation thermique.
